# EUROPÄISCHE PATENTSCHRIFT

(11) **EP 3 737 632 B1**
(45) Veröffentlichungstag und Bekanntmachung des Hinweises auf die Patenterteilung: **06.03.2024**
(21) Anmeldenummer: 19700854.3
(22) Anmeldetag: 08.01.2019
(51) Int. Cl.: B66C 13/18, B66C 23/68, B66F 9/18, B65G 49/06

(54) **HEBEVORRICHTUNG**
LIFTING DEVICE
DISPOSITIF DE LEVAGE

(30) Priorität: 09.01.2018 AT 5000318 U
(43) Veröffentlichungstag der Anmeldung: 18.11.2020
(73) Patentinhaber: Palfinger AG, 5101 Bergheim (AT)
(72) Erfinder: REISCHAUER, Richard, 5231 Schalchen (AT); HANDLECHNER, Paul, 5163 Mattsee (AT); GRAML, Dominik, 5300 Hallwang (AT); BERGMAYR, Benjamin, 1020 Wien (AT)
(74) Vertreter: Torggler & Hofmann Patentanwälte - Innsbruck
(86) Internationale Anmeldenummer: PCT/AT2019/060004
(87) Internationale Veröffentlichungsnummer: WO 2019/136505

(56) Entgegenhaltungen:
- EP-A1- 0 397 076
- EP-A1- 2 295 209
- WO-A1-2017/157482

## Beschreibung

Die vorliegende Erfindung betrifft eine Hebevorrichtung gemäß dem Oberbegriff des Anspruchs 1 und ein Fahrzeug mit einer solchen Hebevorrichtung.

Gattungsgemäße Hebevorrichtungen mit einem verstellbar an einem Kranarm der Hebevorrichtung angeordneten Arbeitsgerät sind seit langem im Stand der Technik bekannt. Dabei kann eine Koordination gewisser Bewegungen des Kranarms der Hebevorrichtung und gewisser Bewegungen des daran angeordneten Arbeitsgeräts hohe Anforderungen an den Benutzer des Krans stellen. Dies ist üblicherweise mit erhöhtem Bedienaufwand und verlangsamter Arbeitsgeschwindigkeit verbunden und kann auch leicht zu einer Fehlbedienung, beispielsweise durch einen ungenügend geschulten Benutzer oder Unachtsamkeit, führen. Bei einer Koordination gewisser Bewegungen des Kranarms und gewisser Bewegungen des Arbeitsgeräts können so ungewollte Beschädigungen am Kran, am Arbeitsgerät oder auch an einer gegebenenfalls angehobenen Last entstehen.

Eine gattungsgemäße Hebevorrichtung ist aus der EP 0 397 076 A1 bekannt. In dieser Druckschrift ist ein Gabelstapler mit einem teleskopierbaren und vertikal verschwenkbaren Ausleger und einem an diesem schwenkbar angeordneten Arbeitsgerät gezeigt. Die Schwenkstellung des Arbeitsgeräts ist mit der Bewegung des Hubzylinders synchronisiert, wodurch die horizontale Ausrichtung des Arbeitsgeräts bei einem vertikalen Verschwenken des Auslegerarms beibehalten werden kann. Bei einer solchen Hebevorrichtung ist es ohne bauliche Änderungen nicht möglich, eine abweichende Soll-Stellung des Arbeitsgeräts vorzugeben. Ebenso ist es ohne bauliche Änderungen nicht möglich, das Arbeitsgerät frei relativ zum Ausleger zu positionieren. Bei einer solchen Hebevorrichtung ist zudem lediglich ein Nachführen der horizontalen Ausrichtung des Arbeitsgeräts bei einem Verschwenken des Auslegerarms in einer vertikalen Ebene möglich.

WO 2017/157482 A1 offenbart eine Hebevorrichtung gemäß dem Oberbegriff des Anspruchs 1.

Aufgabe der Erfindung ist es, einen Kran anzugeben, der eine erweiterte und eine erleichterte Bedienbarkeit sowie eine erhöhte Sicherheit gegenüber einer Fehlbedienung aufweist.

Diese Aufgabe wird durch eine Hebevorrichtung mit den Merkmalen des Anspruchs 1 und ein Fahrzeug mit einer solchen Hebevorrichtung gelöst. Vorteilhafte Ausführungsformen der Erfindung sind in den abhängigen Ansprüchen definiert.

Eine erfindungsgemäße Hebevorrichtung, welche eine Stellvorrichtung zum Einstellen einer vorgegebenen oder vorgebbaren Soll-Stellung des Arbeitsgeräts relativ zum Kranarm oder zu einer vorgegebenen oder vorgebbaren Richtung im Raum aufweist, wobei
- zumindest ein Sensor zur Erfassung einer Ist-Stellung des Arbeitsgeräts relativ zum Kranarm oder zur Richtung im Raum vorgesehen ist, dessen Signale der Stellvorrichtung zuführbar sind, und
- die Stellvorrichtung das Arbeitsgerät in Abhängigkeit der Signale des zumindest einen Sensors in die Soll-Stellung bewegt, falls die Ist-Stellung ungleich der Soll-Stellung ist.

Die Hebevorrichtung weist also eine Stellvorrichtung auf, mittels welcher die Stellung des Arbeitsgeräts relativ zum Kranarm einstellbar ist. Die Stellung des Arbeitsgeräts kann dabei einer vorgegebenen oder vorgebbaren Soll-Stellung des Arbeitsgeräts relativ zum Kranarm oder einer vorgegebenen vorgebbaren Richtung bzw. Ausrichtung des Arbeitsgeräts im Raum entsprechen. Zur Erfassung der Ist-Stellung des Arbeitsgeräts, also der bei beispielsweise einem Arbeitsvorgang jeweils momentan vorliegenden Stellung des Arbeitsgeräts relativ zum Kranarm oder zu einer Raumrichtung, ist zumindest ein Sensor vorgesehen. Die Signale des Sensors sind der Stellvorrichtung zuführbar. In Abhängigkeit des zumindest einen Sensors kann die Stellvorrichtung das Arbeitsgerät in die Soll-Stellung bewegen. Dies kann bei einer Abweichung der Ist-Stellung zur Soll-Stellung erfolgen, wodurch das Arbeitsgerät aus einer im Wesentlichen beliebigen Stellung in die Soll-Stellung bewegt werden kann, oder beispielsweise auch das Arbeitsgeräts während eines Arbeitsvorgangs in der Soll-Stellung gehalten werden kann.

Es kann vorgesehen sein, dass die Stellvorrichtung einen Antrieb zur Veränderung einer Geometrie des Kranarms aufweist und die Stellung des Arbeitsgeräts durch den Antrieb zur Veränderung der Geometrie des Kranarms veränderbar ist. Der Antrieb kann in Form zumindest eines hydraulischen Zylinders zur Veränderung eines Neigungswinkels des Kranarms, einer Knickstellung des Kranarms oder einer Schubstellung des Kranarms ausgebildet sein. Durch ein Schwenkwerk kann ein Verschwenken des Kranarms um eine beispielsweise vertikale Schwenkachse ermöglicht werden. Allgemein können durch die Stellvorrichtung der Kranarm, Teile des Kranarms relativ zueinander und das Arbeitsgerät relativ zum Kranarm bzw. relativ zu Teilen des Kranarms bewegt werden.

Es kann weiter vorgesehen sein, dass die Stellvorrichtung einen zwischen dem Kranarm und dem Arbeitsgerät angeordneten Aktor aufweist und die Stellung des Arbeitsgeräts durch diesen Aktor veränderbar ist. Mittels eines solchen Aktors, also einer Bewegungseinsrichtung, kann das Arbeitsgerät beispielsweise ohne eine Änderung der Geometrie des Kranarms relativ zum Kranarm bewegt werden. Ein solcher Aktor kann beispielsweise in Form eines Rotators oder auch Drehantriebs, einer Zahnstange oder eines Hydraulikzylinders ausgebildet sein. Mittels des Aktors kann ein Verschwenken, Verkippen, Rotieren oder Verfahren des Arbeitsgeräts ermöglicht werden.

Eine Stellvorrichtung, welche einen in seiner Geometrieb veränderbaren Kranarm und einen zwischen Kranarm und Arbeitsgerät angeordneten Aktor umfasst, ist ebenso denkbar.

Es kann weiter vorgesehen sein, dass die Soll-Stellung als eine Stellung des Arbeitsgeräts mit zumindest einem vorbestimmten Winkel im Raum ausgebildet ist. Ein vorbestimmter Winkel im Raum kann beispielsweise einem Winkel einer Achse des Arbeitsgeräts relativ zur Vertikalen oder Horizontalen entsprechen. Dabei kann in anderen Worten von einer absoluten Stellung des Arbeitsgeräts im Raum gesprochen werden.

Es ist möglich, dass der zumindest eine Sensor als Winkelsensor, als Kraft- oder Momentensensor, als Neigungssensor, als Beschleunigungssensor, als Näherungssensor, als optische Erfassungsvorrichtung oder als Vorrichtung zur Emission und Empfang von Schallwellen, insbesondere Ultraschall, oder als Vorrichtung zur Emission und Empfang von elektromagnetischen Wellen. insbesondere Radar oder Laserlicht, ausgebildet ist. Dadurch kann sich - je nach Ausbildung des Sensors - die Relativstellung des Arbeitsgeräts zum Kranarm und/oder die Stellung des Arbeitsgeräts zur Richtung im Raum erfassen lassen. Auch kann durch einen entsprechend ausgebildeten Sensor eine Abweichung der Ist-Stellung des Arbeitsgeräts relativ zur Soll-Stellung des Arbeitsgeräts bestimmen bzw. erfassen lassen.

Es kann vorteilhaft sein, wenn die Stellvorrichtung eine Steuerung aufweist, welcher die Signale des zumindest einen Sensors zur Erfassung einer Ist-Stellung des Arbeitsgeräts relativ zum Kranarm oder zur Richtung im Raum zuführbar sind. Die Steuerung der Stellvorrichtung kann beispielsweise zunächst die ihr zugeführten Sensorsignale (Rohdaten) eines Sensors in ein von der Steuerung weiterverarbeitsbares Signalformat bringen. So können die Signale des zumindest einen Sensors in die Bewegung des Arbeitsgeräts durch die Stellvorrichtung einbezogen werden.

Dabei kann vorteilhaft sein, dass die Steuerung am Arbeitsgerät angeordnet ist oder in einer Kransteuerung des Kranarms ausgebildet ist. Die Steuerung kann also getrennt von der Kransteuerung des Kranarms, beispielsweise als zusätzlich verbautes Modul, oder als Teil der Kransteuerung, beispielsweise in der Kransteuerung integriert, ausgebildet sein. Die Kransteuerung kann einen stationären Bedienstand oder auch ein mobiles Funkpult umfassen, wobei die Steuerung auch jeweils im Bedienstand oder im Funkpult ausgebildet sein kann.

Die Steuerung kann grundsätzlich einen Betriebsmodus aufweisen, in welchem die Stellvorrichtung das Arbeitsgerät in Abhängigkeit der der Stellvorrichtung zugeführten Signale des zumindest einen Sensors in die Soll-Stellung bewegt, falls die Ist-Stellung ungleich der Soll-Stellung ist.

Es kann von Vorteil sein, dass wenigstens ein Sensor vorgesehen ist, durch welchen eine durch Aufnahme eines Ladeguts mittels des Arbeitsgeräts bedingte Veränderung der Stellung des Arbeitsgeräts relativ zum Kranarm oder relativ zur Richtung im Raum erfassbar ist. Es kann weiter zumindest ein Sensor vorgesehen sein, durch welchen eine durch Aufnahme eines Ladeguts mittels des Arbeitsgeräts bedingte mechanische Belastung des Arbeitsgeräts erfassbar ist. Eine solche mechanische Belastung des Arbeitsgeräts kann beispielsweise eine Momentenbelastung sein.

Dabei kann vorgesehen sein, bei der Aufnahme eines Ladeguts ein Angreifen des Arbeitsgeräts am Ladegut außerhalb des Schwerpunkts des Ladeguts erfassbar ist. So kann beispielsweise eine bei Aufnahme eines Ladeguts erfolgende Bewegung des Arbeitsgeräts - also beispielsweise ein Verschwenken, Verkippen, Rotieren oder Verfahren des Arbeitsgeräts - erfasst werden. Eine solche Bewegung kann etwa durch ein auf das Arbeitsgerät wirkendes Moment bewirkt werden, wenn beispielsweise ein ausgedehntes Ladegut vom Arbeitsgerät in einem gewissen Abstand vom Schwerpunkt des Ladeguts angegriffen bzw. angeschlagen wird.

Dabei kann weiter vorgesehen sein, dass der zumindest eine Sensor zur Erfassung einer Ist-Stellung des Arbeitsgeräts den wenigstens einen Sensor bildet. Der Sensor, durch welchen eine durch Aufnahme eines Ladeguts mittels des Arbeitsgeräts bedingte Veränderung der Stellung des Arbeitsgeräts relativ zum Kranarm oder relativ zur Richtung im Raum erfassbar ist, oder durch welchen eine durch Aufnahme eines Ladeguts mittels des Arbeitsgeräts bedingte mechanische Belastung des Arbeitsgeräts erfassbar ist, kann also durch den Sensor zur Erfassung der Ist-Stellung des Arbeitsgeräts ausgebildet sein. Der Sensor zur Erfassung der ist-Stellung des Arbeitsgeräts kann so beispielsweise durch Erfassung der bei einem Arbeitsvorgang jeweils momentan vorliegenden Stellung des Arbeitsgeräts relativ zum Kranarm oder zu einer Raumrichtung eine Änderung der momentan vorliegenden Stellung erfassen, woraus sich eine Veränderung der Stellung des Arbeitsgeräts relativ zum Kranarm oder relativ zur Richtung im Raum oder eine mechanische Belastung des Arbeitsgeräts ableiten lassen kann.

Erfindungsgemäß ist die Stellvorrichtung dazu ausgebildet, durch einen Benutzer manuell oder pedal auf das Arbeitsgerät oder auf ein vom Arbeitsgerät aufgenommenes Ladegut oder gestikal relativ zum Arbeitsgerät ausgeübte Bewegungen zuzulassen oder zu unterstützen. So kann beispielsweise durch wenigstens einen der verbauten Sensoren - gegebenenfalls in einem speziell dafür geeigneten Betriebsmodus der Stellvorrichtung - ein Einwirken des Benutzers auf das Arbeitsgerät oder auch auf ein vom Arbeitsgerät aufgenommenes Ladegut in eine Bewegung des Arbeitsgeräts umgesetzt werden. So kann beispielsweise das Arbeitsgerät oder ein vom Arbeitsgerät aufgenommenes Ladegut in eine vom Benutzer durch direktes Positionieren (Ausrichten) vorgebbare Stellung gebracht werden. Es ist auch denkbar, dass durch einen der verbauten Sensoren das Arbeitsgerät durch eine Gestensteuerung durch den Benutzer positioniert bzw. ausgerichtet werden kann.

Es kann grundsätzlich vorgesehen sein, dass das Arbeitsgerät in Form eines Lastaufnahmemittels ausgebildet ist. Dabei sind unterschiedliche Ausführungen eines Lastaufnahmemittels, wie beispielsweise ein Lastaufnahmemittel in Form eines allgemein eine physikalische Interaktion mit der Umgebung ermöglichenden Manipulators, eines Rotators, eines Tilt-Rotators oder eines Greifers denkbar. Das Lastaufnahmemittel kann jeweils einen an diesem angeordneten Aktor umfassen.

Es kann vorgesehen sein, dass der zumindest eine Sensor zur Erfassung einer Ist-Stellung des Arbeitsgeräts am oder im Arbeitsgerät anordenbar ist. Der Sensor kann also am Arbeitsgerät anordenbar sein oder im Arbeitsgerät bzw. in einem Teil des Arbeitsgeräts anordenbar sein. Der Sensor kann ebenso am Kranarm anordenbar sein oder im Kranarm bzw. in einem Teil des Kranarms anordenbar sein. Es ist auch denkbar, dass der Sensor zwischen dem Arbeitsgerät und dem Kranarm anordenbar ist. Es ist nicht ausgeschlossen, dass der Sensor an oder in einem Fahrzeug anordenbar ist.

Eine besonders vorteilhafte Ausbildung der Hebevorrichtung kann sich ergeben, wenn die Hebevorrichtung als Ladekran ausgebildet ist.

Wie eingangs bereits erwähnt wurde, wird auch Schutz für ein Fahrzeug mit einer wie zuvor beschriebenen Hebevorrichtung begehrt.

Ausführungsbeispiele der Erfindung werden anhand der Figuren diskutiert. Es zeigen:
- Fig. 1: ein eine Ausführung einer Hebevorrichtung mit einer Hubarbeitsbühne,
- Fig. 2: ein Fahrzeug mit einer Hebevorrichtung,
- Fig. 3a und 3b: ein Fahrzeug mit einer Hebevorrichtung in verschiedenen Schwenkstellungen,
- Fig. 4: eine weitere Ausführung eines Fahrzeugs mit einer Hebevorrichtung,
- Figur 5a und 5b: Detailansichten einer Kranarms mit einem daran angeordneten Aktor, und
- Figur 6: eine Detailansicht eines Kranarms mit einem an diesem angeordneten Arbeitsgerät.

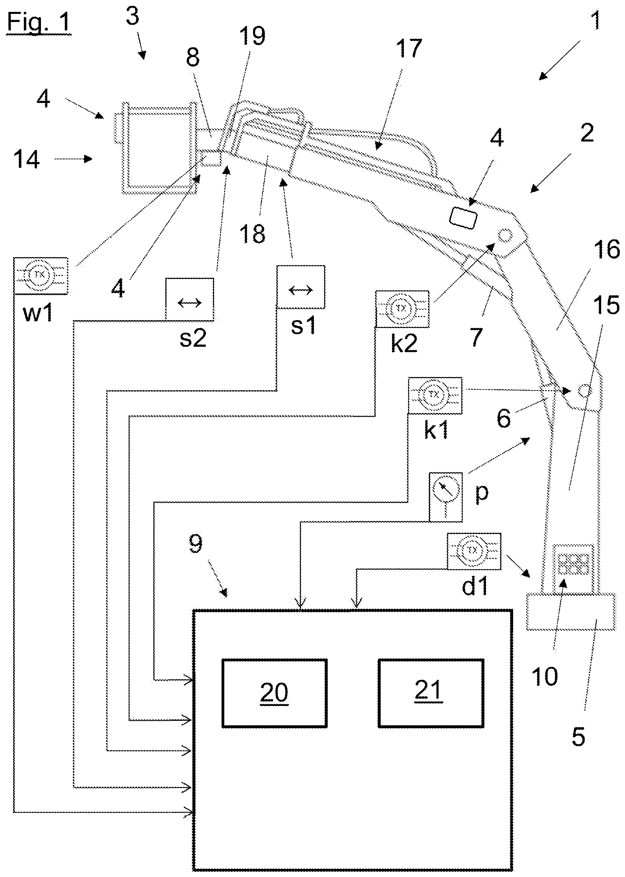

In Figur 1 ist eine Ausführung einer Hebevorrichtung 1 in Form eines Kranarms 2 mit einem daran angeordneten Arbeitsgerät 3 in Form einer Hubarbeitsbühne 14 und einer Steuerung 9 mit zugehöriger Sensorik gezeigt. Der Kranarm 2 weist einen Kransockel 5, eine Kransäule 15, einen Hubarm 16 und einen Knickarm 17 auf, wobei der Knickarm 17 zur Längenänderung des Kranarms 2 einen teleskopierbaren ersten Kranschubarm 18 und einen teleskopierbaren zweiten Kranschubarm 19 aufweist. In der gezeigten Ausführung umfasst die Sensorik der Hebevorrichtung 1 einen Schubstellungssensor s1 zur Erfassung der Schubstellung des ersten Kranschubarms 18, einen Schubstellungssensor s1 zur Erfassung der Schubstellung des zweiten Kranschubarms 19, einen Drehwinkelsensor d1 zur Erfassung der Drehstellung um eine vertikale Achse der Kransäule 15 zum Kransockel 5, einen Knickwinkelsensor k1 zur Erfassung der Knickwinkelstellung des Hubarms 16 relativ zur Kransäule 15, einen Knickwinkelsensor k2 zur Erfassung der Knickwinkelstellung des Knickarms 17 relativ zum Hubarm 16 und einen Drucksensor p zur Erfassung des Hydraulikdrucks im Hydraulikzylinder 6 (Hubzylinder) der Hebevorrichtung 1. Eine Druckerfassung kann ebenso für den Hydraulikzylinder 7 (Knickzylinder) der Hebevorrichtung 1 erfolgen. Weiter umfasst die Sensorik in der gezeigten Ausführung einen Sensor 4, mittels welchem die Stellung des Arbeitsgeräts 3 bzw. der Hubarbeitsbühne 14 erfasst werden kann. Die durch den in dieser Ausführung als Winkelsensor w1 ausgebildeten Sensor 4 erfasste Stellung des Arbeitsgeräts 3 bzw. der Hubarbeitsbühne 14 kann einer Stellung relativ zum Kranarm 2 oder zu einer Richtung im Raum entsprechen. So kann beispielsweise durch den Winkelsensor w1 jeweils eine Drehwinkelstellung des Arbeitsgeräts 3 bzw. der Hubarbeitsbühne 14 um eine der drei Raumachsen erfasst werden. Es ist auch möglich, dass ein Sensor 4 zur Erfassung der Stellung des Arbeitsgeräts 3 bzw. der Hubarbeitsbühne 14 am Arbeitsgerät 3 bzw. der Hubarbeitsbühne 14 oder am Kranarm 2 selbst angeordnet ist. Die von der Sensorik erfassten Werte werden der Steuerung 9 über entsprechende Verbindungen, sei es eine kabelgebundene Messleitung oder eine drahtlose Verbindung, zugeführt. Die Steuerung 9 kann einem Speicher 20 und eine Recheneinheit 21 aufweisen. Die Steuerung 9 kann in der Kransteuerung 10 des Kranarms 2 integriert sein oder am Arbeitsgerät 3 angeordnet sein.

Die Stellung des Arbeitsgeräts 3 bzw. der Hubarbeitsbühne 14 kann durch eine Geometrieänderung des Kranarms 2 und durch einen zwischen dem Kranarm 2 und dem Arbeitsgerät 3 bzw. der Hubarbeitsbühne 14 angeordneten Aktor 8 geändert werden.

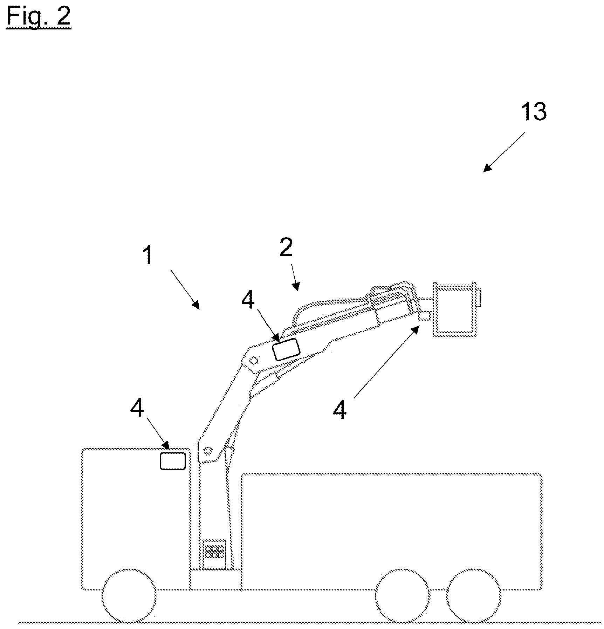

Figur 2 zeigt eine Seitenansicht eines Fahrzeugs 13 mit einer als Kranarm 2 ausgebildeten Hebevorrichtung 1. Die Ausbildung der Hebevorrichtung 1 entspricht dabei im Wesentlichen jener der Figur 1.

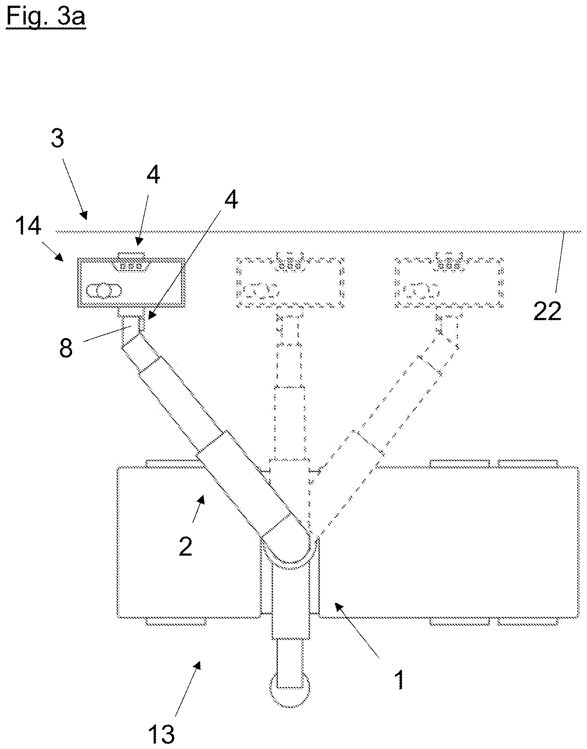

Figur 3a zeigt in einer Draufsicht ein Fahrzeug 13 mit einer als Kranarm 2 ausgebildeten Hebevorrichtung 1 mit einem Kranarm 2 und einem am Kranarm 2 angeordneten und durch diesen und einen Aktor 8 bewegbaren Arbeitsgerät 3 in Form einer Hubarbeitsbühne 14. Die Ausbildung der Hebevorrichtung 1 entspricht dabei wieder im Wesentlichen jener der Figur 1. Wie dargestellt ist es möglich, dass ein Sensor 4 zur Erfassung der Stellung des Arbeitsgeräts 3 bzw. der Hubarbeitsbühne 14 am Arbeitsgerät 3, am Kranarm 2 und am Fahrzeug 13 selbst angeordnet ist.

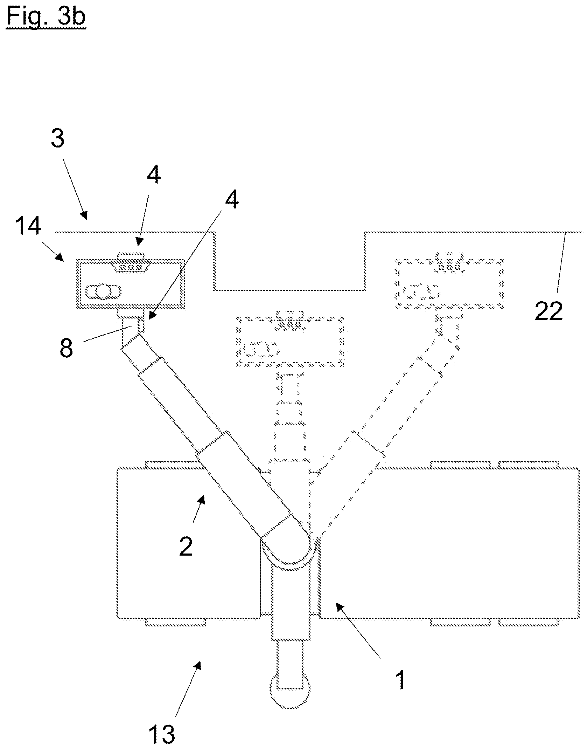

Das Arbeitsgerät 3 in Form der Hubarbeitsbühne ist relativ zum Kranarm 2 verstellbar angeordnet, wobei in Figur 3a verschiedene Schwenkstellungen um eine vertikale Schwenkachse des Arbeitsgeräts 3 in Form Hubarbeitsbühne 14 relativ zum Kranarm 2 während des Verschwenkens des Kranarms 2 um die Kransäule 5 dargestellt sind. Die Erfassung der Relativstellung des Arbeitsgeräts 3 bzw. der Hubarbeitsbühne 14 relativ zum Kranarm 2 bzw. auch die Erfassung der Stellung des Arbeitsgeräts 3 bzw. der Hubarbeitsbühne 14 im Raum kann über einen am Arbeitsgerät 3 bzw. der Hubarbeitsbühne 14 oder an der Hebevorrichtung 1 angeordneten Sensor 4 erfolgen. Wie im Beispiel der Figur 3a dargestellt, kann eine Soll-Stellung des Arbeitsgeräts 3 einer vorgegebenen Richtung im Raum entsprechen. Wie gezeigt kann das Arbeitsgerät 3 in Form der Hubarbeitsbühne 14 zunächst parallel zu einer Wand 22 ausgerichtet sein (linke Darstellung des Kranarms 2 und der Hubarbeitsbühne 14). Bei einem Verschwenken des Kranarms 2 um eine vertikale Schwenkachse kann das Arbeitsgeräts 3 in Form der Hubarbeitsbühne durch die Stellvorrichtung - welche in dieser Ausführung durch den Kranarm 2 und den Aktor 8 ausgebildet ist - derart bewegt bzw. verschwenkt werden, dass das Arbeitsgerät 3 während des Verschwenkens des Kranarms 2 weiterhin in der Soll-Stellung, also in der parallel zur Wand 22 verlaufenden Ausrichtung, gehalten wird. Die Soll-Stellung, also die vorgegebene Raumrichtung, kann dabei einer absoluten Richtung im Raum oder, wie auch in Figur 3a gezeigt, der Richtung der Wand 22 folgen. Eine Anwendung dazu ist in Figur 3b gezeigt.

Die Darstellung der Figur 3b entspricht im Wesentlichen jener der Figur 3a, wobei jedoch die Wand 22 einen unebenen Verlauf aufweist. Die Signale des Sensors 4 sind der Stellvorrichtung, welche wie dargestellt durch den Kranarm 2 und den Aktor 8 ausgebildet ist, zu führbar und das Arbeitsgerät 3 in Form der Hubarbeitsbühne 14 kann während des Verschwenkens des Kranarms 2 in der gewünschten Soll-Stellung gehalten werden. Im Beispiel der Figur 3a und auch 3b kann die Soll-Stellung etwa einem gleichbleibenden Abstand des Arbeitsgeräts 3 in Form der Hubarbeitsbühne 14 zur Wand 22 entsprechen.

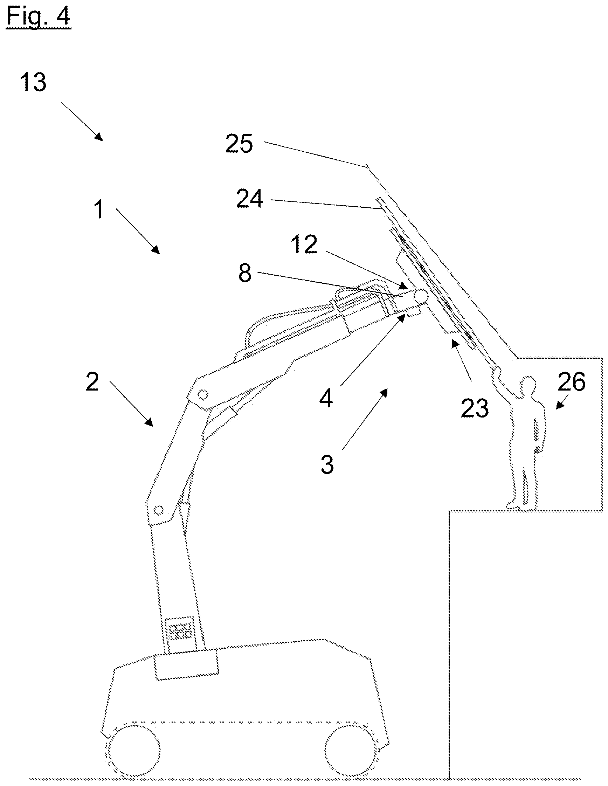

Figur 4 zeigt eine weitere Ausführung eines Fahrzeugs 13 in Form eines Raupenkrans mit einer Hebevorrichtung 1 in Form eines Kranarms 2 mit einem Arbeitsgerät 3 in Form eines Vakuum-Sauggreifers 23. Vakuum-Sauggreifer 23 können beispielsweise bei der Handhabung von flächigem Ladegut 11 wie etwa einer Glasplatte 24 eingesetzt werden. In Figur 4 ist die Installation einer Glasplatte 24 an einer Fassade 25 dargestellt. Die Hebevorrichtung 1, welche analog zu der in Figur 1 gezeigten Ausführung der Hebevorrichtung 1 ausgestattet sein kann, weist wieder einen Sensor 4 zur Erfassung der momentanen Stellung des Arbeitsgeräts 3 bzw. des Vakuum-Sauggreifers 23 auf. Zwischen dem Kranarm 2 und dem Arbeitsgerät 3 bzw. dem Vakuum-Sauggreifer 23 ist ein Aktor 8 angeordnet. In der in Figur 4 gezeigten Ausführung weist die Hebevorrichtung 1 einen weiteren Sensor 12 auf, welcher eine mechanische Belastung des Arbeitsgeräts 3 durch das Ladegut 11 erfassen kann. Durch den weiteren Sensor 12, beispielsweise als Kraftsensor ausgebildet, kann die durch die Glasplatte 24 auf den Vakuum-Saugreifer 23 bzw. den Aktor 8 ausgeübte Gewichtskraft bzw. Momentenbelastung erfasst werden. Dadurch kann es ermöglicht werden, dass ein Benutzer 26 manuell oder pedal - also per Hand oder per Fuß - auf das Arbeitsgerät 3 oder auf ein vom Arbeitsgerät 3 aufgenommenes Ladegut 11 ausgeübte Bewegungen zuzulassen oder zu unterstützen. In der gezeigten Ausführung kann so beispielsweise ein Einsetzen der Glasplatte 24 an der Fassade 25 durch ein direktes, manuelles Ausrichten der Glasplatte 24 durch den Benutzer 26 erleichtert werden. Es ist auch denkbar, dass der weitere Sensor 12 als optischer Sensor ausgebildet ist und ein indirektes Ausrichten der Glasplatte 24 und des Arbeitsgeräts 3 durch Gesten des Benutzers 26 relativ zum Arbeitsgerät 3 erfolgt.

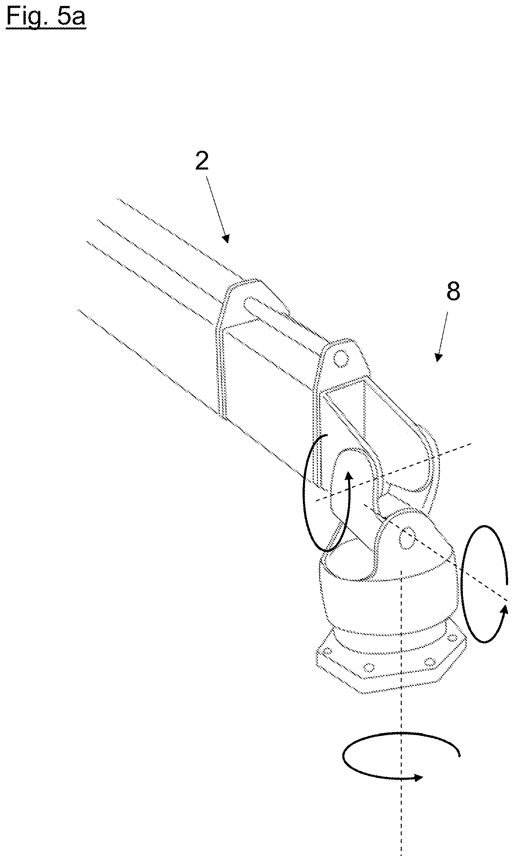

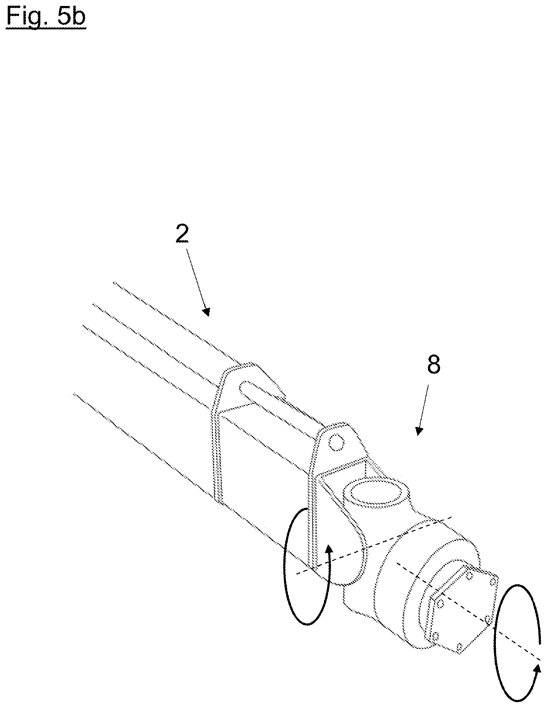

In Figur 5a und 5b sind Detailansichten eines Kranarms 2 mit einem daran angeordneten Aktor 8 in Form eines Tilt-Rotators in verschiedenen Schwenkstellungen gezeigt. Der Kranarm 2 kann grundsätzlich analog zu der in Figur 1 gezeigten Ausführung des Kranarms 2 ausgestattet sein. Ein wie in Figur 5a gezeigter Aktor 8 kann eine Schwenkbewegung um drei Raumachsen durchführen bzw. ermöglichen. Dadurch kann ein am Aktuator 8 angeordnetes Arbeitsgerät (nicht dargestellt) im Wesentlichen frei im Raum bzw. relativ zum Kranarm 2 positioniert werden. Ein wie in Figur 5b gezeigter Aktor 8 kann eine Schwenkbewegung um zwei Raumachsen zulassen. Der in Figur 5a und 5b gezeigte Aktor 8 kann jeweils einen Sensor (nicht dargestellt) aufweisen, durch welchen die Stellung eines am Aktor 8 angeordneten Arbeitsgeräts erfassbar ist.

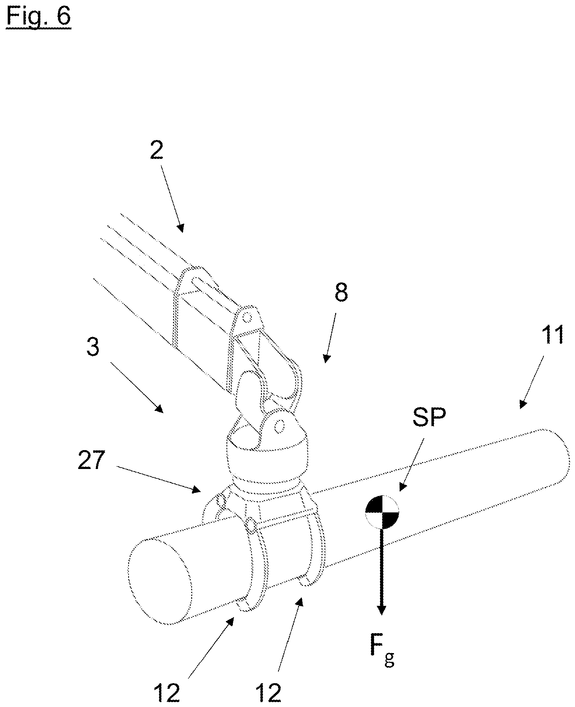

In Figur 6 ist eine Detailansicht eines wie in der Figur 5a ausgebildeten Kranarms 2 mit einem daran angeordneten Aktor 8 und einem an diesem angeordneten Arbeitsgeräts 3 in Form eines Greifers 27 gezeigt. Der Greifer 27 weist in der gezeigten Ausführung in den Greiferspitzen jeweils als Drucksensor ausgebildete Sensoren 12 auf, mittels welcher eine auf das Arbeitsgerät 3 durch das aufgenommene Ladegut 11 wirkende Kraft erfasst werden kann. So kann beispielsweise bei einem Angreifen des Arbeitsgeräts 3 am Ladegut 11 außerhalb des Schwerpunkts SP ein durch die Gewichtskraft F_{g} des Ladeguts 11 hervorgerufenes Moment - und damit eine Kraft - auf das Arbeitsgerät 3 wirken, welche durch die Sensoren 12 bzw. durch einen Vergleich der durch die Sensoren 12 ermittelten Kräfte erfassbar ist. Eine auf den Aktor 8 wirkende Kraft kann ebenso durch einen im Aktor 8 integrierten Sensor (nicht dargestellt) erfasst werden.

### Bezugszeichenliste:

- 1: Hebevorrichtung
- 2: Kranarm
- 3: Arbeitsgerät
- 4: Sensor
- 5: Kransockel
- 6, 7: hydraulischer Zylinder
- 8: Aktor
- 9: Steuerung
- 10: Kransteuerung
- 11: Ladegut
- 12: Sensor
- 13: Fahrzeug
- 14: Hubarbeitsbühne
- 15: Kransäule
- 16: Hubarm
- 17: Knickarm
- 18: erster Kranschubarm
- 19: zweiter Kranschubarm
- 20: Speicher
- 21: Recheneinheit
- 22: Wand
- 23: Vakuum-Sauggreifer
- 24: Glasplatte
- 25: Fassade
- 26: Benutzer
- 27: Greifer
- Gewichtskraft: F_{g}
- Schwerpunkt: SP
- p: Drucksensor
- s1, s2: Schubstellungssensor
- d1: Drehwinkelsensor
- k1, k2, k3: Knickwinkelsensor
- w1: Winkelsensor

## Patentansprüche

1. Hebevorrichtung (1) mit einem - vorzugsweise knickbaren - Kranarm (2) und einem am Kranarm (2) angeordneten und durch diesen bewegbaren Arbeitsgerät (3), wobei das Arbeitsgerät (3) relativ zum Kranarm (2) verstellbar angeordnet ist, wobei eine Stellvorrichtung zum Einstellen einer vorgegebenen oder vorgebbaren Soll-Stellung des Arbeitsgeräts (3) relativ zum Kranarm (2) oder zu einer vorgegebenen oder vorgebbaren Richtung im Raum vorgesehen ist, wobei zumindest ein Sensor (4) zur Erfassung einer Ist-Stellung des Arbeitsgeräts (3) relativ zum Kranarm (2) oder zur Richtung im Raum vorgesehen ist, dessen Signale der Stellvorrichtung zuführbar sind und dass die Stellvorrichtung das Arbeitsgerät (3) in Abhängigkeit der Signale des zumindest einen Sensors (4) in die Soll-Stellung bewegt, falls die Ist-Stellung ungleich der Soll-Stellung ist, **dadurch gekennzeichnet, dass** die Stellvorrichtung dazu ausgebildet ist, durch einen Benutzer manuell oder pedal auf das Arbeitsgerät (3) oder auf ein vom Arbeitsgerät (3) aufgenommenes Ladegut (11) oder gestikal relativ zum Arbeitsgerät (3) ausgeübte Bewegungen zuzulassen oder zu unterstützen.

2. Hebevorrichtung nach Anspruch 1, wobei die Stellvorrichtung einen Antrieb (6, 7) zur Veränderung einer Geometrie des Kranarms (2), vorzugsweise in Form eines Schwenkwerks für den Kranarm und zumindest eines hydraulischen Zylinders (6, 7) zur Veränderung eines Neigungswinkels des Kranarms (2), einer Knickstellung des Kranarms (2) oder einer Schubstellung des Kranarms (2), aufweist und die Stellung des Arbeitsgeräts (3) durch den Antrieb (6, 7) zur Veränderung der Geometrie des Kranarms (2) veränderbar ist.

3. Hebevorrichtung nach einem der vorangehenden Ansprüche, wobei die Stellvorrichtung einen zwischen dem Kranarm (2) und dem Arbeitsgerät (3) angeordneten Aktor (8), vorzugsweise in Form eines Rotators, einer Zahnstange oder eines Hydraulikzylinders, aufweist und die Stellung des Arbeitsgeräts (3) durch diesen Aktor (8) veränderbar ist.

4. Hebevorrichtung nach wenigstens einem der vorangehenden Ansprüche, wobei die Soll-Stellung als eine Stellung des Arbeitsgeräts (3) mit zumindest einem vorbestimmten Winkel im Raum ausgebildet ist.

5. Hebevorrichtung nach wenigstens einem der vorangehenden Ansprüche, wobei der zumindest eine Sensor (4) als Winkelsensor (w1), als Kraft- oder Momentensensor, als Neigungssensor, als Beschleunigungssensor, als Näherungssensor, als optische Erfassungsvorrichtung oder als Vorrichtung zur Emission und Empfang von Schallwellen, insbesondere Ultraschall, oder als Vorrichtung zur Emission und Empfang von elektromagnetischen Wellen. insbesondere Radar oder Laserlicht, ausgebildet ist.

6. Hebevorrichtung nach wenigstens einem der vorangehenden Ansprüche, wobei die Stellvorrichtung eine Steuerung (9) aufweist, welcher die Signale des zumindest einen Sensors (4) zur Erfassung einer Ist-Stellung des Arbeitsgeräts (3) relativ zum Kranarm (2) oder zur Richtung im Raum zuführbar sind.

7. Hebevorrichtung nach dem vorangehenden Anspruch, wobei die Steuerung (9) am Arbeitsgerät (3) angeordnet ist oder in einer Kransteuerung (10) des Kranarms (2) ausgebildet ist.

8. Hebevorrichtung nach wenigstens einem der vorangehenden Ansprüche, wobei wenigstens ein Sensor (12) vorgesehen ist, durch welchen eine durch Aufnahme eines Ladeguts (11) mittels des Arbeitsgeräts (3) bedingte Veränderung der Stellung des Arbeitsgeräts (3) relativ zum Kranarm (2) oder relativ zur Richtung im Raum oder durch welchen eine durch Aufnahme eines Ladeguts (11) mittels des Arbeitsgeräts (3) bedingte mechanische Belastung - vorzugsweise einer Momentenbelastung - des Arbeitsgeräts (3) erfassbar ist.

9. Hebevorrichtung nach dem vorangehenden Anspruch, wobei bei der Aufnahme eines Ladeguts (11) ein Angreifen des Arbeitsgeräts (3) am Ladegut (11) außerhalb des Schwerpunkts (SP) des Ladeguts (11) erfassbar ist.

10. Hebevorrichtung nach einem der beiden vorangehenden Ansprüche, wobei der zumindest eine Sensor (4) zur Erfassung einer Ist-Stellung des Arbeitsgeräts (3) den wenigstens einen Sensor (12) bildet.

11. Hebevorrichtung nach wenigstens einem der vorangehenden Ansprüche, wobei das Arbeitsgerät (3) in Form eines Lastaufnahmemittels - insbesondere in Form eines Manipulators, eines Rotators, eines Tilt-Rotators oder eines Greifers, gegebenenfalls mit jeweils einem daran angeordneten Aktor (8) - ausgebildet ist.

12. Hebevorrichtung nach wenigstens einem der vorangehenden Ansprüche, wobei der zumindest eine Sensor (4) zur Erfassung einer Ist-Stellung des Arbeitsgeräts (3) am oder im Arbeitsgerät (3), am oder im Kranarm (2) oder zwischen Arbeitsgerät (3) und Kranarm (2) angeordnet ist, oder der Sensor (4) an oder in einem Fahrzeug (13) anordenbar ist.

13. Hebevorrichtung nach wenigstens einem der vorangehenden Ansprüche, wobei die Hebevorrichtung (1) als Ladekran ausgebildet ist.

14. Fahrzeug (13) mit einer Hebevorrichtung (1) nach wenigstens einem der vorangehenden Ansprüche.

## Claims

1. A lifting device (1) having a - preferably bendable - crane arm (2) and a working device (3) which is arranged on the crane arm (2) and is movable thereby, wherein the working device (3) is arranged displaceably relative to the crane arm (2), wherein there is provided an actuating device for setting a predefined or predefinable target position of the working device (3) relative to the crane arm (2) or to a predefined or predefinable direction in space, wherein there is provided at least one sensor (4) for detecting an actual position of the working device (3) relative to the crane arm (2) or to the direction in space, the signals of which can be fed to the actuating device and the actuating device moves the working device (3) into the target position in dependence on the signals of the at least one sensor (4) if the actual position is not the same as the target position, **characterised in that** the actuating device is adapted to assist or permit movements exerted by a user manually or pedally on the working device (3) or on a load (11) picked up by the working device (3) or by gesture relative to the working device (3).

2. A lifting device according to claim 1 wherein the actuating device has a drive (6, 7) for varying a geometry of the crane arm (2), preferably in the form of a pivotal mechanism for the crane arm and at least one hydraulic cylinder (6, 7) for varying an angle of inclination of the crane arm (2), a bend position of the crane arm (2) or an extension position of the crane arm (2) and the position of the working device (3) can be varied by the drive (6, 7) for varying the geometry of the crane arm (2).

3. A lifting device according to one of the preceding claims wherein the actuating device has an actuator (8) arranged between the crane arm (2) and the working device (3), preferably in the form of a rotator, a rack or a hydraulic cylinder, and the position of the working device (3) is variable by said actuator (8).

4. A lifting device according to at least one of the preceding claims wherein the target position is a position of the working device (3) with at least one predetermined angle in space.

5. A lifting device according to at least one of the preceding claims wherein the at least one sensor (4) is in the form of an angle sensor (w1), a force or moment sensor, an inclination sensor, an acceleration sensor, a proximity sensor, an optical detection device or a device for emitting and receiving sound waves, in particular ultrasound, or a device for emitting and receiving electromagnetic waves, in particular radar or laser light.

6. A lifting device according to at least one of the preceding claims wherein the actuating device has a control means (9) to which the signals of the at least one sensor (4) for detecting an actual position of the working device (3) relative to the crane arm (2) or the direction in space can be fed.

7. A lifting device according to the preceding claims wherein the control means (9) is arranged on the working device (3) or is provided in a crane control means (10) of the crane arm (2).

8. A lifting device according to at least one of the preceding claims wherein there is provided at least one sensor (12), by means of which a variation caused by pick-up of a load (11) by means of the working device (3) in the position of the working device (3) relative to the crane arm (2) or relative to the direction in space or by which a mechanical loading caused by pick-up of a load (11) by means of the working device (3) - preferably a moment loading - of the working device (3) can be detected.

9. A lifting device according to the preceding claim wherein upon pick-up of a load (11) engagement of the working device (3) on the load (11) outside the centre of gravity (SP) of the load (11) can be detected.

10. A lifting device according to one of the two preceding claims wherein the at least one sensor (4) for detecting an actual position of the working device (3) forms the at least one sensor (12).

11. A lifting device according to at least one of the preceding claims wherein the working device (3) is in the form of a load pick-up means - in particular in the form of a manipulator, a rotator, a tilt rotator or a gripper, possibly with a respective actuator (8) arranged thereon.

12. A lifting device according to at least one of the preceding claims wherein the at least one sensor (4) for detecting an actual position of the working device (3) is arranged on or in the working device (3), on or in the crane arm (2) or between the working device (3) and the crane arm (2), or the sensor (4) can be arranged on or in a vehicle (13).

13. A lifting device according to at least one of the preceding claims wherein the lifting device (1) is in the form of a loading crane.

14. A vehicle (13) having a lifting device (1) according to at least one of the preceding claims.

## Revendications

1. Dispositif de levage (1) avec un bras de grue (2) - de préférence articulé - et un appareil de travail (3) disposé sur le bras de grue (2) et pouvant être déplacé par celui-ci, dans lequel l'appareil de travail (3) est disposé de manière à pouvoir être ajusté par rapport au bras de grue (2), dans lequel un dispositif de réglage est prévu pour régler une position de consigne prédéfinie ou pouvant être prédéfinie de l'appareil de travail (3) par rapport au bras de grue (2) ou par rapport à une direction dans l'espace spécifiée ou pouvant être spécifiée, dans lequel au moins un capteur (4) est prévu pour détecter une position réelle de l'appareil de travail (3) par rapport au bras de grue (2) et par rapport à la direction dans l'espace, dont les signaux peuvent être amenés au dispositif de réglage, et le dispositif de réglage déplace l'appareil de travail (3) en fonction des signaux de l'au moins un capteur (4) dans la position de consigne si la position réelle est différente de la position de consigne, **caractérisé en ce que** le dispositif de réglage est réalisé pour permettre ou assister des mouvements exercés par un utilisateur manuellement ou par une pédale sur l'appareil de travail (3) ou sur une charge (11) reçue par l'appareil de travail (3) ou de manière gestuelle par rapport à l'appareil de travail (3).

2. Dispositif de levage selon la revendication 1, dans lequel le dispositif de réglage présente un entraînement (6, 7) pour modifier une forme géométrique du bras de grue (2), de préférence sous la forme d'un mécanisme de pivotement pour le bras de grue et d'au moins un vérin hydraulique (6, 7), pour modifier un angle d'inclinaison du bras de grue (2), une position articulée du bras de grue (2) ou une position de coulissement du bras de grue (2) et la position de l'appareil de travail (3) peut être modifiée par l'entraînement (6, 7) pour modifier la forme géométrique du bras de grue (2).

3. Dispositif de levage selon l'une quelconque des revendications précédentes, dans lequel le dispositif de réglage présente un actionneur (8) disposé entre le bras de grue (2) et l'appareil de travail (3), de préférence sous la forme d'un rotateur, d'une crémaillère ou d'un vérin hydraulique, et la position de l'appareil de travail (3) peut être modifiée par ledit actionneur (8).

4. Dispositif de levage selon au moins l'une quelconque des revendications précédentes, dans lequel la position de consigne est réalisée en tant qu'une position de l'appareil de travail (3) avec au moins un angle prédéfini dans l'espace.

5. Dispositif de levage selon au moins l'une quelconque des revendications précédentes, dans lequel l'au moins un capteur (4) est réalisé en tant qu'un capteur d'angle (w1), en tant qu'un capteur de force ou de couple, en tant qu'un capteur d'inclinaison, en tant qu'un capteur d'accélération, en tant qu'un capteur de rapprochement, en tant qu'un capteur de détection optique ou en tant qu'un dispositif d'émission et de réception d'ondes acoustiques, en particulier d'ondes ultrasonores, ou en tant qu'un dispositif d'émission et de réception d'ondes électromagnétiques, en particulier de radar ou de lumière laser.

6. Dispositif de levage selon au moins l'une quelconque des revendications précédentes, dans lequel le dispositif de réglage présente une commande (9), à laquelle les signaux de l'au moins un capteur (4) peuvent être amenés pour détecter une position réelle de l'appareil de travail (3) par rapport au bras de grue (2) ou par rapport à la direction dans l'espace.

7. Dispositif de levage selon la revendication précédente, dans lequel la commande (9) est disposée sur l'appareil de travail (3) ou est réalisée dans une commande de grue (10) du bras de grue (2).

8. Dispositif de levage selon au moins l'une quelconque des revendications précédentes, dans lequel est prévu au moins un capteur (12), par lequel une modification de la position de l'appareil de travail (3) par rapport au bras de grue (2) ou par rapport à la direction dans l'espace, liée à la réception d'une charge (11) au moyen de l'appareil de travail (3) peut être détectée ou par lequel une contrainte mécanique liée à la réception d'une charge (11) au moyen de l'appareil de travail (3) - de préférence d'une contrainte de couple - de l'appareil de travail (3) peut être détectée.

9. Dispositif de levage selon la revendication précédente, dans lequel un engrènement de l'appareil de travail (3) sur la charge (11) en dehors du point de gravité (SP) de la charge (11) peut être détecté lors de la réception d'une charge (11).

10. Dispositif de levage selon l'une quelconque des deux revendications précédentes, dans lequel l'au moins un capteur (4) destiné à détecter une position réelle de l'appareil de travail (3) forme l'au moins un capteur (12).

11. Dispositif de levage selon au moins l'une quelconque des revendications précédentes, dans lequel l'appareil de travail (3) est réalisé sous la forme d'un moyen de réception de charge - en particulier sous la forme d'un manipulateur, d'un rotateur, d'un rotateur d'inclinaison ou d'un système de préhension, éventuellement avec respectivement un actionneur (8) disposé sur celui-ci.

12. Dispositif de levage selon au moins l'une quelconque des revendications précédentes, dans lequel l'au moins un capteur (4) destiné à détecter une position réelle de l'appareil de travail (3) est disposé sur ou dans l'appareil de travail (3), sur ou dans le bras de grue (2) ou entre l'appareil de travail (3) et le bras de grue (2), ou le capteur (4) peut être disposé sur ou dans un véhicule (13).

13. Dispositif de levage selon au moins l'une quelconque des revendications précédentes, dans lequel le dispositif de levage (1) est réalisé en tant que grue de chargement.

14. Véhicule (13) avec un dispositif de levage (1) selon au moins l'une quelconque des revendications précédentes.
